# EUROPEAN PATENT SPECIFICATION

(11) **EP 4 591 761 B1**
(45) Date of publication and mention of the grant of the patent: **25.11.2026**
(21) Application number: 24195238.1
(22) Date of filing: 19.08.2024
(51) Int. Cl.: A47F 5/00

(54) **TOOL ELEMENT HANGER**
AUFHÄNGER DES WERKZEUGTEILS
SUSPENSION DE L'ÉLÉMENT D'OUTIL

(30) Priority: 23.01.2024 PL 44759324
(43) Date of publication of application: 30.07.2025
(73) Proprietor: GLAS-HIT Eksport Import Mgr inz. Joanna Chudy, 42-130 Wreczyca Wielka (PL)
(72) Inventor: CHUDY, Joanna, 42-130 Wreczyca Wielka (PL); CHUDY, Grzegorz, 42-130 Wreczyca Wielka (PL); CHUDY, Mateusz, 42-130 Wreczyca Wielka (PL)
(74) Representative: Korbela, Anna

(56) References cited:
- DE-U1- 29 904 322
- US-A- 5 740 911

## Description

The subject of the invention is a tool element hanger, which enables mounting a specific tool element and displaying it, for example, in a display of products offered in a given shop. The developed hanger is intended for hanging a tool element, usually on a shop hook (single or double).

Various elements for hanging tools and displaying them in shops and shop windows are known from the state of the art.

Various hangers, which are intended for presenting jewellery, clothing items, toys or other items are also known.

There is a solution known from the prior art, i.e. the American patent application US2013313402A1 titled "Tool Hanger", with a priority date of 28 May 2012 which relates to a tool hanger that includes a hanging element and a tool holding element. The tool holding element can be folded up and fitted in a tool holder, such as a socket. The tool is then attached via the tool holding element. The distal end of the tool holding element undetachably clips on the other end of the tool holding element. Thus, the unauthorized removal of the tool is prevented, and burglar-proof function is achieved.

There is also a Chinese patent application CN101219026A, titled "Combination pole for hanging holder for hand tools having anti-theft device", with a priority date of 12 January 2007. The subject of the invention is a column combined with a hand tool holder, which includes an anti-theft feature. The system mainly comprises a column body and a locking piece glidingly arranged at a guide channel. Wherein, the column body is convexly provided with a locating convex grain, the outer surface of the column is concavely provided with an axial guide channel. A resisting margin which stretches out of the column periphery is formed at the top end of the column body and a locking hole which is opposite to and communicated with the guide channel is arranged on the resisting margin. The top margin of the locking piece stretches out of the locking hole on the resisting margin and forms a hook part which is resting on the top surface of the resisting margin. Another resisting part against the bottom of the resisting margin is formed on the locking piece and a locking convex point is convexly formed on the locking piece. The invention can be matched with a throughout or non-throughout hand tool to use, which improves the practicability and application flexibility of the combined column, properly reduces the material consumption for the combined column molding and further lowers the whole manufacturing cost.

There is also a solution protected by the American patent US10130194B1, titled "Tool Hanger", with a priority date of 12 October 2017. This tool hanger consists of a base with a rotatably attached socket element. The base is configured to be slidably assembled within a track slot and includes a wide section and at least one narrow section in a first direction, where the wide section defines a first length dimension in a long direction, each narrow section defines a second length dimension in the given direction. The first length dimension is greater than the short side dimension. At least one side of the wide section has a resilient convex portion which is projecting toward the second direction. A socket combination element and one of the base elements have a hole, whereas the other has a combination structure which is rotatably assembled within the hole. A tool hanger is also provided, including a holder body and a base.

The state of the art also includes the Slovenian patent application SI20187A titled "Tool hanger" with a priority date of 5 March 1999. This invention relates to a tool hanger, consisting of a flat holder with fastening assembly, which is provided to be inserted into the deepening in the tool, preferably a four-edge deepening in the adapter of the ring spanner. The fastening assembly includes a rigid wedge, a fastening device and grabbing elements, which at the handle-facing ends feature a gripping device facing the fastening device.

There is also a German utility model DE29904322U1, titled "Insert for tool hanging rack", with a priority date of 9 March 1999. The insert has a square body with two opposite first sides and two opposite second sides, and a passage passing transversely through the two first sides. There is a snap device on one of these sides. The snap device has at least one bendable strip with first side facing away from the passage and second side facing towards it. There is a holding projection extending out from the bendable strip.

Known and described solutions do not change the fact that currently displaying tools (for example, garden tools) is still challenging.

The purpose of the invention was to develop a tool element hanger whose shape would allow for easy display of a given tool element, while simultaneously being equipped with mechanisms that effectively prevent the tool element from slipping off and falling (especially in cases where the tool element is significantly heavier than the hanger). Additionally, the hanger's design would allow for easy unlocking and removal of the tool element when the hanger is no longer needed, for example, after the tool element has been purchased.

The essence of the developed invention, i.e., the tool element hanger designed for hanging a tool element using a connection hole, lies in its known features, specifically that the hanger consists essentially of two parts: an upper element with a top hole (located in the upper central part of the upper element) and a lower element with a button.

The most important and distinctive features of the presented invention consist in the fact that a lower element, shaped as a cylinder or elliptical cylinder, is permanently attached to the lower middle edge of the upper element. The upper part of the lower element is a solid form, and the point where this solid form of the lower element connects with the upper element is formed by:
- the upper plane, meaning the upper base of the solid form of the lower element, and
- a section of the lower edge of the upper element.

In the vertical wall of the lower element, a spring-loaded button is incorporated, which also forms part of the monolithic hanger. It protrudes from the vertical wall of the lower element and is surrounded at the bottom and sides by a cutout made in the wall of the lower element, shaped like the letter "U". The arms of the "U" extend upward into two parallel vertical slots, so the only point of connection between the button and the lower element is at the top of the button.

Preferably, the developed and described tool element hanger is characterized by the fact that the lower element has only a front side wall of the solid forming the lower element, along with the upper and lower bases of the lower element.

Preferably, the design of the tool element hanger is characterized by the fact that the upper element of the hanger has a rectangular shape.

Often, in the developed hanger, the corners of the upper element of the hanger are rounded or bevelled.

Typically, in the developed tool element hanger, either the lower element or the upper element have additional reinforcing stiffeners, most commonly in the form of overmoldings.

Preferably, in the developed tool element hanger, the upper hole in the upper element has a thickened edge.

An advantage of the tool element hanger that is the subject of this invention is the ability to easily yet securely mount the displayed tool element.

Thanks to the developed invention, securing this element becomes possible, even though, until now, the ergonomic shape of the displayed tool element often hindered its mounting and presentation using previously known hangers.

As a result, the tools offered and sold could not be displayed (for example, they could not be hung on so-called *"shop hooks*"). In order to be presented they had to be exhibited in containers or shop baskets.

The developed solution makes it easier to present the tools sold.

The use of the developed tool element hanger, which is the subject of this invention, prevents scratches, dents, and other mechanical damage to tool elements put up for sale in containers or shop baskets.

The subject of the invention is presented in the drawings, in which:

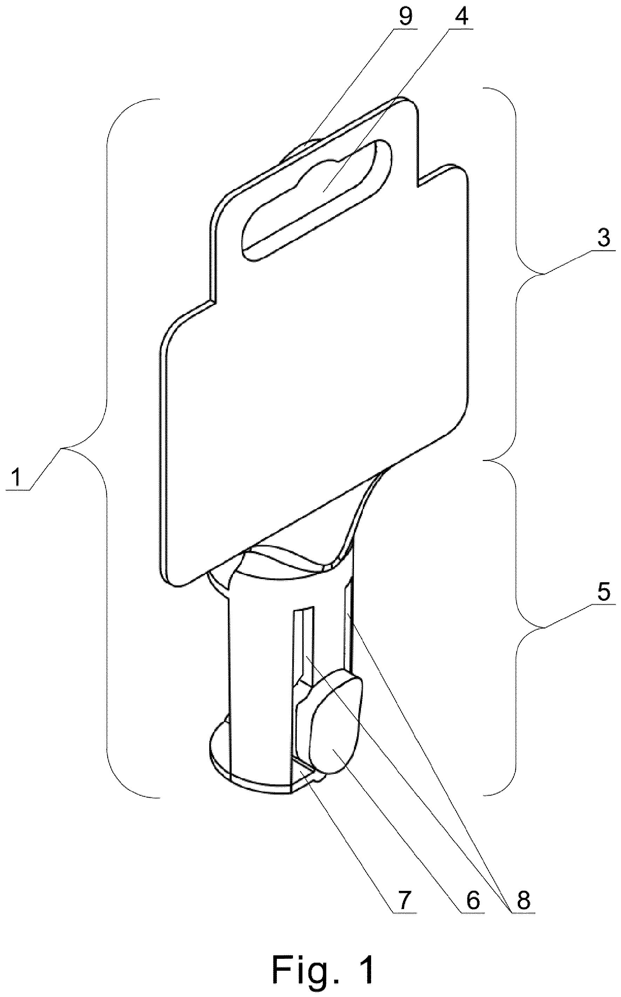

Fig. 1 - shows a tool element hanger in an axonometric view from above,

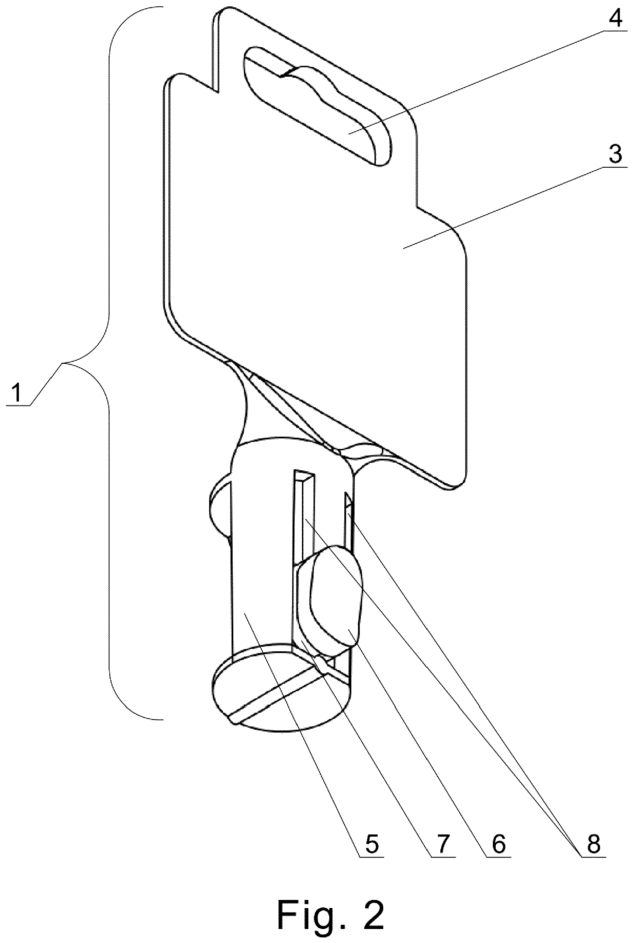

Fig. 2 - shows a tool element hanger in an axonometric view from below,

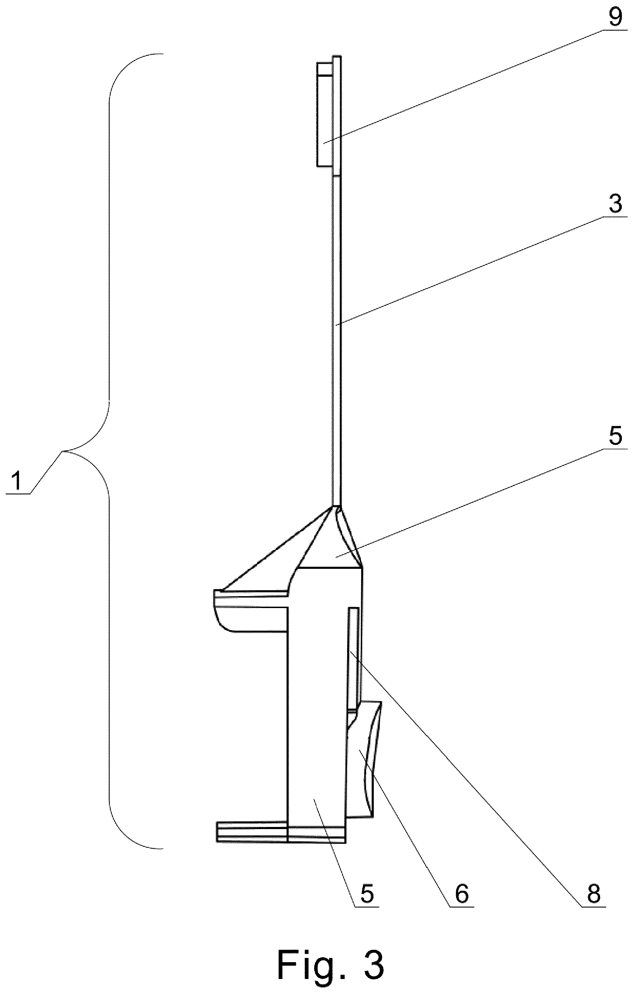

Fig. 3 - shows a tool element hanger in a side view,
Fig. 4 - shows a tool element hanger in a front view, while

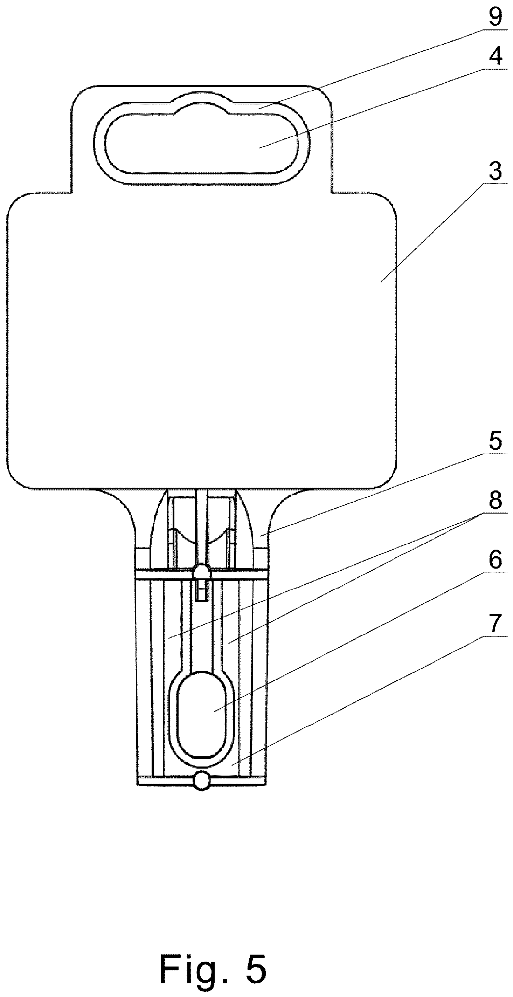

Fig. 5 - shows a tool element hanger in an axonometric view from the back with visible reinforcements (thickenings around the upper hole),

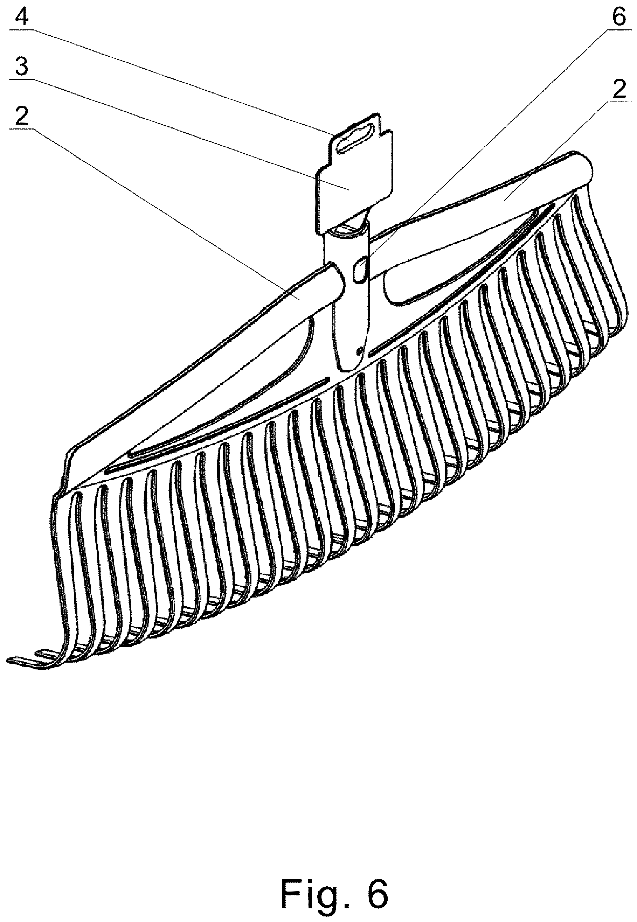

Fig. 6 - shows a tool element hanger in an axonometric view from above with the tool element inserted into the hanger, while
Fig. 7 - shows photographs of the elements prepared for removal, namely a tool element hanger in a front view and a fragment of the tool element prepared for insertion.

As shown in the drawings, the subject of the invention is a hanger 1 for tool element 2, which, after purchase and removal of tool 2 from the display, will be used after mounting it on a shaft, handle, or any other ergonomic grip known in the prior art.

Tool element 2 could be, for example: a rake head, a shovel blade [or spade], or a broom brush.

Thus, hanger 1 is designed to secure a selected part, that is, any tool element 2 that the user wants to display to encourage its purchase.

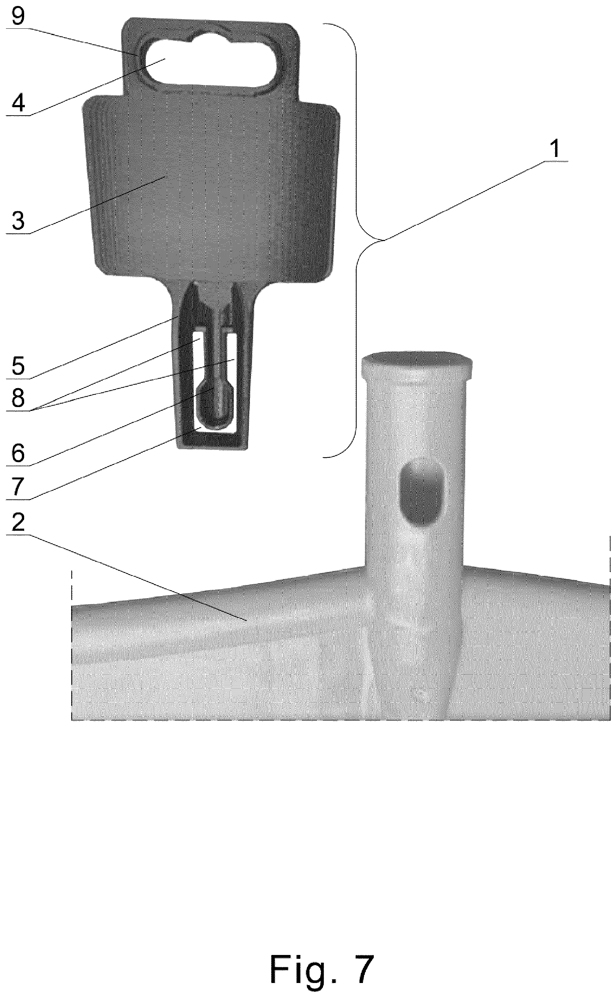

Hanger 1 is designed for convenient attachment of tool element 2 to hanger 1. It is prepared to connect with tool element 2 that is constructed to achieve this result, that is, one whose design allows for easy connection between tool element 2 and hanger 1, and later with a shaft, handle, or any other grip, specifically tool element 2 with a connecting hole as shown in the example (fig. 7).

Hanger 1 essentially consists of two parts:
- upper element 3, which typically has horizontal upper hole 4 designed for hanging hanger 1 on a hook, arm, or other display element where tool element 2 will be presented, and
- lower element 5, onto which tool element 2 is slid. Lower element 5 features a so-called *"locating convex grain",* i.e. button 6, which is convex, can be pressed, and is described further below.

Upper element 3 of hanger 1 preferably has a rectangular shape, with its corners possibly rounded or bevelled, and its edges may be angled.

Upper hole 4 (made in the upper central part of upper element 3), which allows for hanging hanger 1, preferably has:
- an oval shape, or
- an oval shape, deepened at the top, or
- a shape formed by combining a horizontal oval with a semicircle placed above the horizontal oval, or
- a shape formed by combining a horizontal rectangle with rounded corners and a semicircle placed above the horizontal rectangle.

The shape of upper hole 4 is known in the prior art.

However, lower element 5 is permanently attached to a section of the lower middle edge of upper element 3.

Lower element 5 typically has the shape of a completely or partially hollow cylinder (with a circular base) or an elliptical cylinder (with an elliptical base).

Lower element 5 is connected to upper element 3.

More specifically, the upper part of lower element 5 is connected to the lower part of upper element 3 through a solid formed in the upper part of lower element 5.

Even more precisely, the point of contact consists of the upper plane (upper base) of lower element 5 and a section of the lower edge of upper element 3.

Both lower element 5 and upper element 3 may have additional reinforcing stiffeners, such as overmoldings, to enhance rigidity.

To minimize the amount of material needed to manufacture hanger 1, lower element 5 may have walls of the solid forming lower element 5 that are only partially constructed. For example, the wall of the cylinder may be formed only above half of the edge of the lower plane of lower element 5.

This construction facilitates the proper formation of the crucial blocking element, which is protruding button 6.

Button 6 is also a part of monolithic hanger 1.

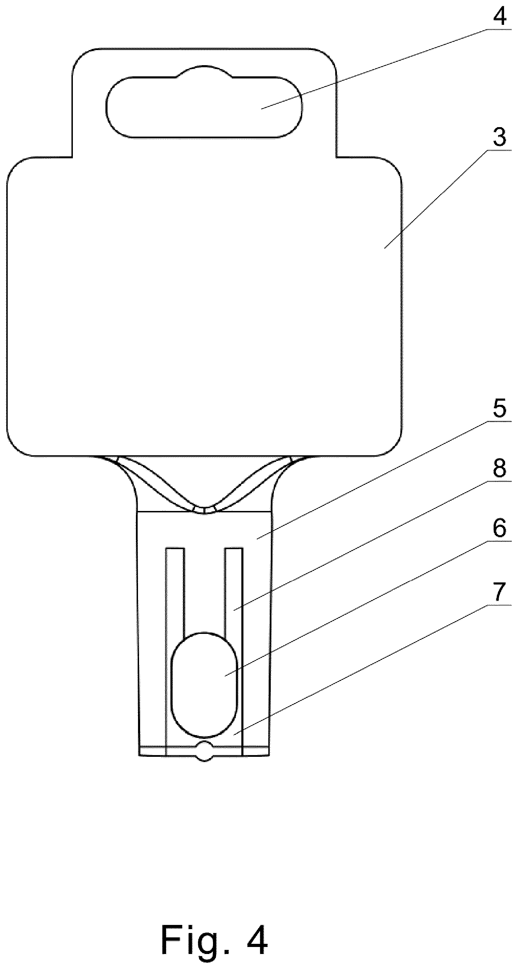

Button 6, made in the vertical wall of lower element 5, is surrounded at the bottom and sides by cutout 7 shaped like the letter "U", with its arms extending upward into two parallel vertical slots 8 (fig. 4).

Thus, the only point of connection between button 6 and lower element 5 is at the upper part of button 6.

In other words, a section of the upper edge of the side wall of button 6, along one of the shorter edges of button 6 (the edge closer to upper element 3), is connected to lower element 5.

The way hanger 1 is shaped, with lower element 5 and protruding button 6, allows button 6 to function with a spring-like action.

Thus, two parallel vertical slots 8 are made along lower element 5, connected to cutout 7, and button 6 located between them acts as the most protruding *"end"* of the described portion of lower element 5 of hanger 1.

Button 6 is a protruding part of the solid of lower element 5, distinguished by surrounding cutout 7 and slots 8.

Slots 8 allow for deeper spring action of button 6, and when button 6 is pressed, they enable button 6 to retract within the contour of lower element 5 of hanger 1.

Owing to the described shaping of these elements, spring-loaded button 6, which initially protrudes beyond the outline of the vertical wall of lower element 5, retracts into the outline of lower element 5 of hanger 1 when pressed or when tool element 2 is slid onto hanger 1.

Button 6 remains recessed as long as it is not aligned with the connecting hole in tool element 2. Once it reaches this position and *"snaps"* into the connecting hole, it expands, returning to its original position. It then protrudes again beyond the outline of the vertical wall of lower element 5 and starts to secure the position of hanger 1 mounted on tool element 2.

In this way, button 6 secures tool element 2 against slipping off from hanger 1. When it is necessary to remove tool element 2 from hanger 1, this can be done by pressing button 6 again, which will retract into the contour of lower element 5 of hanger 1 until tool element 2 is removed. Then, button 6 returns to its original position and previous state.

When displaying tool element 2 is no longer needed, for example, after its purchase, hanger 1 with button 6 is removed from tool element 2. In its place, the entire tool (ending with a shaft, handle, or other grip) is inserted, where the end of the tool is shaped similarly to lower part 5 of hanger 1, meaning it also has a spring-loaded element identical to button 6 in hanger 1.

Additionally, upper hole 4 in upper element 3 may have thickening 9, which strengthens the construction of hanger 1 and prevents damage to hanger 1 when tool element 2 of significant weight is mounted. Thickening 9 enhances the rigidity of hanger 1.

### List of elements:

1. hanger,
2. tool element,
3. upper element (of hanger 1),
4. upper hole,
5. lower element (of hanger 1),
6. button,
7. cutout,
8. slot,
9. thickening.

## Claims

1. A hanger (1) for a tool element (2) - for hanging a tool element (2) with a connecting hole
- consisting of two main parts: an upper element (3) with an upper hole (4) in the upper, central part of the upper element (3), and a lower element (5) with a button (6), **characterized in that** the lower element (5) is inseparably attached to a section of the lower, central edge of the upper element (3), and the lower element (5) has the shape of a cylinder or elliptical cylinder, with the upper part of the lower element (5) being a solid, and the contact point between the solid of the lower element (5) and the upper element (3) constitutes:
- the upper plane - meaning the upper base - of the solid of the lower element (5), and
- a section of the lower edge of the upper element (3),
whereas in the vertical wall of the lower element (5), a spring-loaded button (6) is made, which also forms part of the monolithic hanger (1) and this button (6) protrudes from the vertical wall of the lower element (5) and is surrounded at the bottom and on the sides by a cutout (7) made in the wall of the lower element (5), which is shaped like the letter "U", with its arms extending upward into two parallel vertical slots (8), therefore, the only point where the button (6) is connected to the lower element (5) is located at the top of the button (6).

2. The hanger (1) for the tool element (2) according to claim 1, **characterized in that** the lower element (5) has only the front side wall of the solid forming the lower element (5), as well as the upper and lower bases of the lower element (5).

3. The hanger (1) for the tool element (2) according to any of claims 1 to 2, **characterized in that** the upper element (3) of the hanger (1) has a rectangular shape.

4. The hanger (1) for the tool element (2) according to claim 3, **characterized in that** the corners of the upper element (3) of the hanger (1) are rounded or bevelled.

5. The hanger (1) for the tool element (2) according to claim 1 or 2 or 3 or 4, **characterized in that** the lower element (5) or the upper element (3) has additional reinforcing stiffeners, preferably in the form of overmolds.

6. The hanger (1) for the tool element (2) according to claim 1 or 2 or 3 or 4 or 5, **characterized in that** the upper hole (4) of the upper element (3) has a thickening (9).

## Patentansprüche

1. Aufhänger (1) für ein Werkzeugteil (2) - zum Aufhängen eines Werkzeugteils (2) mit einer Verbindungsöffnung - bestehend aus zwei Hauptteilen: einem oberen Element (3) mit einer oberen Öffnung (4) im oberen, mittleren Bereich des oberen Elements (3), und einem unteren Element (5) mit einem Knopf (6), **dadurch gekennzeichnet, dass** das untere Element (5) untrennbar an einem Abschnitt der unteren, mittleren Kante des oberen Elements (3) befestigt ist und das untere Element (5) die Form eines Zylinders oder eines elliptischen Zylinders aufweist, wobei der obere Teil des unteren Elements (5) massiv ausgebildet ist und die Kontaktstelle zwischen dem massiven Teil des unteren Elements (5) und dem oberen Element (3) bildet:
- die obere Ebene - d. h. die obere Grundfläche - des massiven Teils des unteren Elements (5), und
- einen Abschnitt der unteren Kante des oberen Elements (3),
wobei in der vertikalen Wand des unteren Elements (5) ein federbelasteter Knopf (6) ausgebildet ist, der ebenfalls einen Teil des einstückig ausgebildeten Aufhängers (1) bildet, wobei dieser Knopf (6) aus der vertikalen Wand des unteren Elements (5) hervorsteht und an seiner Unterseite und an seinen Seiten von einem in der Wand des unteren Elements (5) ausgebildeten, U-förmigen Ausschnitt (7) umgeben ist, dessen Schenkel sich nach oben in zwei parallele vertikale Schlitze (8) erstrecken, so dass die einzige Verbindungsstelle, an der der Knopf (6) mit dem unteren Element (5) verbunden ist, an der Oberseite des Knopfes (6) angeordnet ist.

2. Der Aufhänger (1) für das Werkzeugteil (2) nach Anspruch 1, **dadurch gekennzeichnet, dass** das untere Element (5) lediglich die vordere Seitenwand des das untere Element (5) bildenden massiven Teils sowie die obere und die untere Grundfläche des unteren Elements (5) aufweist.

3. Der Aufhänger (1) für das Werkzeugteil (2) nach einem der Ansprüche 1 bis 2, **dadurch gekennzeichnet, dass** das obere Element (3) des Aufhängers (1) eine rechteckige Form aufweist.

4. Der Aufhänger (1) für das Werkzeugteil (2) nach Anspruch 3, **dadurch gekennzeichnet, dass** die Ecken des oberen Elements (3) des Aufhängers (1) abgerundet oder abgeschrägt sind.

5. Der Aufhänger (1) für das Werkzeugteil (2) nach einem der Ansprüche 1 bis 4, **dadurch gekennzeichnet, dass** das untere Element (5) oder das obere Element (3) zusätzliche Versteifungsrippen aufweist, vorzugsweise in Form von Aufspritzungen.

6. Der Aufhänger (1) für das Werkzeugteil (2) nach einem der Ansprüche 1 bis 5, **dadurch gekennzeichnet, dass** die obere Öffnung (4) des oberen Elements (3) eine Verdickung (9) aufweist.

## Revendications

1. Dispositif de suspension (1) pour un élément d'outil (2) - destiné à suspendre un élément d'outil (2) muni d'un trou de liaison - comprenant deux parties principales : un élément supérieur (3) comportant un trou supérieur (4) dans la partie supérieure centrale de l'élément supérieur (3), et un élément inférieur (5) comportant un bouton (6), **caractérisé en ce que** l'élément inférieur (5) est fixé de manière indissociable à une portion du bord inférieur central de l'élément supérieur (3), et l'élément inférieur (5) présente la forme d'un cylindre ou d'un cylindre elliptique, la partie supérieure de l'élément inférieur (5) étant pleine, et le point de contact entre la partie pleine de l'élément inférieur (5) et l'élément supérieur (3) constituant :
- le plan supérieur - c'est-à-dire la base supérieure - de la partie pleine de l'élément inférieur (5), et
- une portion du bord inférieur de l'élément supérieur (3),
dans lequel un bouton (6) sollicité par ressort est réalisé dans la paroi verticale de l'élément inférieur (5), ledit bouton (6) faisant également partie du dispositif de suspension monobloc (1), ledit bouton (6) faisant saillie de la paroi verticale de l'élément inférieur (5) et étant entouré, à sa partie inférieure et sur ses côtés, par une découpe (7) réalisée dans la paroi de l'élément inférieur (5), ladite découpe (7) ayant la forme de la lettre « U », ses branches s'étendant vers le haut dans deux fentes verticales parallèles (8), de sorte que le seul point de liaison entre le bouton (6) et l'élément inférieur (5) est situé au niveau de la partie supérieure du bouton (6).

2. Dispositif de suspension (1) pour l'élément d'outil (2) selon la revendication 1, **caractérisé en ce que** l'élément inférieur (5) ne comporte que la paroi latérale avant de la partie pleine formant l'élément inférieur (5), ainsi que les bases supérieure et inférieure de l'élément inférieur (5).

3. Dispositif de suspension (1) pour l'élément d'outil (2) selon l'une quelconque des revendications 1 à 2, **caractérisé en ce que** l'élément supérieur (3) du dispositif de suspension (1) présente une forme rectangulaire.

4. Dispositif de suspension (1) pour l'élément d'outil (2) selon la revendication 3, **caractérisé en ce que** les coins de l'élément supérieur (3) du dispositif de suspension (1) sont arrondis ou chanfreinés.

5. Dispositif de suspension (1) pour l'élément d'outil (2) selon l'une quelconque des revendications 1 à 4, **caractérisé en ce que** l'élément inférieur (5) ou l'élément supérieur (3) comporte des nervures de renforcement supplémentaires, de préférence sous la forme de surmoulages.

6. Dispositif de suspension (1) pour l'élément d'outil (2) selon l'une quelconque des revendications 1 à 5, **caractérisé en ce que** le trou supérieur (4) de l'élément supérieur (3) comporte un épaississement (9).
